# FASCICULE DE BREVET EUROPEEN

(11) **EP 1 470 426 B1**
(45) Date de publication et mention de la délivrance du brevet: **13.09.2006**
(21) Numéro de dépôt: 03715055.4
(22) Date de dépôt: 28.01.2003
(51) Int. Cl.: G01N 35/04, G01N 35/02

(54) **DISPOSITIF D ENTRAINEMENT D UNE BANDE DE CUVETTES DANS UN APPAREIL D ANALYSE**
ANTRIEBSVORRICHTUNG EINER KÜVETTENKETTE IN EINER ANALYSEVORRICHTUNG
DRIVE ARRANGEMENT FOR A STRIP OF CUVETTES IN AN ANALYTICAL DEVICE

(30) Priorité: 01.02.2002 FR 0201236
(43) Date de publication de la demande: 27.10.2004
(73) Titulaire: Stago Instruments, 92230 Gennevilliers (FR)
(72) Inventeur: ROUSSEAU, Alain, F-75004 Paris (FR); ABOU-SALEH, Khaled, F-92400 Courbevoie (FR); PERIN, Patrick, F-78210 Saint Cyr l'Ecole (FR); POUTREL, Philippe, F-95430 Auvers sur Oise (FR)
(74) Mandataire: de Saint-Palais, Arnaud Marie
(86) Numéro de dépôt international: PCT/FR2003/000256
(87) Numéro de publication internationale: WO 2003/065048

(56) Documents cités:
- EP-A- 0 837 331
- WO-A-99/64839
- US-A- 4 168 775
- PATENT ABSTRACTS OF JAPAN vol. 013, no. 426 (P-935), 22 septembre 1989 (1989-09-22) -& JP 01 158356 A (OLYMPUS OPTICAL CO LTD), 21 juin 1989 (1989-06-21)

## Description

La présente invention concerne un perfectionnement à un appareil d'analyse automatique utilisable notamment pour la détermination des temps de modification de l'état physique d'un milieu.

Cet appareil s'applique tout particulièrement, mais non exclusivement, à la détermination du temps de coagulation du sang conformément à un processus selon lequel l'échantillon sanguin est disposé dans le fond d'une cuvette contenant une bille ferromagnétique entraînée dans un mouvement périodique sous l'effet d'un champ magnétique extérieur. Les modifications des mouvements de la bille ferromagnétique (par exemple les variations d'amplitude et/ou de fréquence) qui sont représentatives des changements de l'état physique du sang, sont alors détectées à l'aide de moyens appropriés.

Un tel appareil se trouve exposé dans le brevet EP 0 325 874 déposé au nom de la Société Diagnostica Stago et dans la demande WO 99 64839 déposée au nom de la Société Junior Instruments.

Le brevet EP 0325874 comprend un distributeur de cuvettes à usage unique comprenant chacune un fond incurvé constituant le chemin de roulement de la bille et une face opposée au fond présentant une ouverture. Des bords transversaux de cette ouverture s'étendent deux rebords à angle droit par rapport aux faces des cuvettes. Les cuvettes sont disposées côte à côte et fixées de façon détachable sur une bande de support souple qui obture leurs ouvertures. La bande équipée de cuvettes peut être enroulée sur une bobine pouvant s'engager sur un moyeu prévu dans un compartiment de stockage et de distribution de l'appareil. Les cuvettes défilent une à une dans un poste de détection.

Il s'avère que cette solution présente notamment l'inconvénient de ne pas garantir un bon positionnement de la cuvette dans le poste de détection. L'analyse des mouvements de la bille risque donc d'être faussée. Ceci peut donc conduire à un risque d'erreur sur le résultat de l'analyse.

Le brevet WO 9964839 décrit un appareil de dosage immunologique mettant en oeuvre une succession de cuvettes solidarisées par un film de manière à former une bande. Les cuvettes présentent une ouverture au niveau de laquelle s'étendent deux rebords opposés en saillies vers l'extérieur de la cuvette. L'entraînement de la bande est assuré au moyen de deux bandes sans fin guidées par des galets et prenant appui sur les faces latérales des cuvettes. Cette solution n'est visiblement pas appropriée à un dispositif de détection faisant intervenir des moyens électromagnétiques disposés latéralement vis-à-vis des cuvettes.

L'invention a donc plus particulièrement pour but de supprimer ces inconvénients.

A cet effet, elle propose un dispositif d'entraînement d'une succession de cuvettes solidarisées par un film de manière à former une bande dans un appareil d'analyse automatique comprenant au moins une courroie crantée dont les crans agissent sur les cuvettes pour assurer l'entraînement de la bande.

Les cuvettes présentent une ouverture au niveau de laquelle s'étendent deux rebords opposés en saillie vers l'extérieur de la cuvette, ces rebords présentant des conformations qui coopèrent avec la courroie crantée pour assurer à la fois un entraînement, un centrage et une indexation des cuvettes.

Selon l'invention, les susdits rebords présentent chacun deux bords obliques par rapport à l'axe longitudinal de la bande de sorte que l'ensemble bande/cuvettes qui présente deux bords latéraux dentelés assure une fonction de crémaillère.

Par ailleurs, les bordures latérales du film présentent chacune un profil dentelé dont les dents sont accentuées par la présence des rebords de cuvettes.

Grâce à l'engrènement des crantages de la courroie entre les dents dé l'ensemble film/cuvettes, l'entraînement permet d'indexer la position des cuvettes.

Un tel dispositif ne présente pas de jeu dans son maniement que ce soit dans un sens ou dans l'autre.

Un mode d'exécution de l'invention sera décrit ci-après, à titre d'exemple non limitatif, avec référence aux dessins annexés dans lesquels :

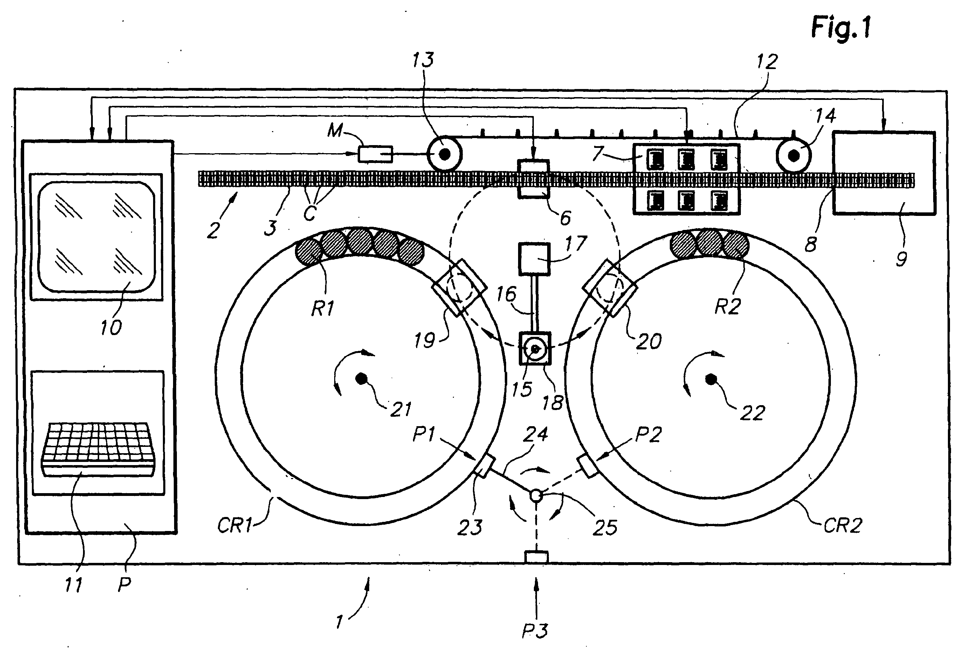

La figure 1 est une représentation schématique d'un appareil d'analyse automatique de dimension moyenne ;
La figure 2 est une vue en perspective schématique d'une cuvette montée sur le film ;
La figure 3 est une vue schématique de dessus du film équipé de ses cuvettes et du système d'entraînement à crémaillère ;
La figure 4 est une coupe schématique verticale selon A/A de la figure 3.

Dans cet exemple, l'appareil d'analyse automatique 1 fait intervenir une alimentation en cuvettes comportant une succession d'une centaine de cuvettes C formant une bande 2.

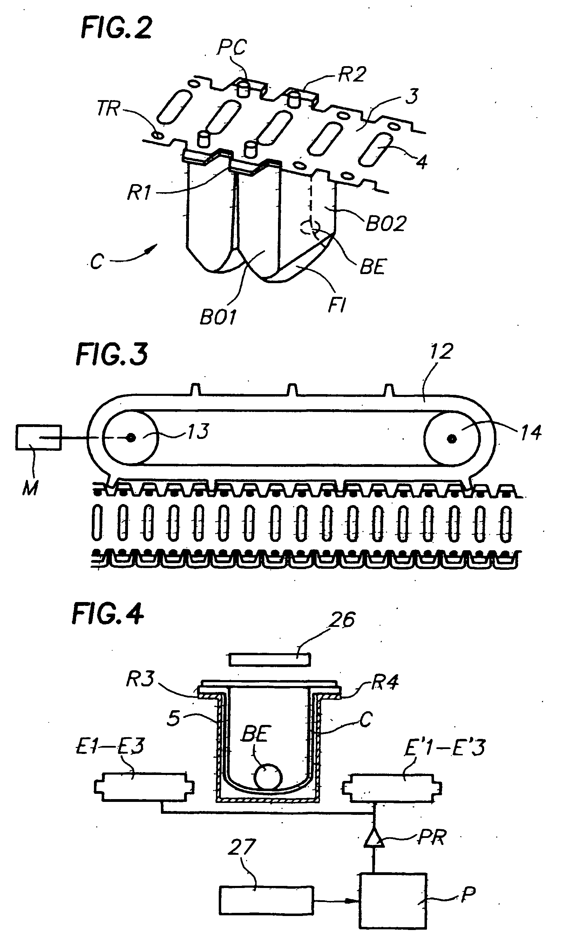

Comme illustré sur la figure 2, les cuvettes C réalisées par moulage d'une matière plastique transparente présentent chacune un corps de forme plate parallélépipédique dont le fond incurvé FI constitue un chemin de roulement pour une bille BE en matière ferromagnétique. A l'opposé de ce fond FI, la cuvette C présente une ouverture au niveau de laquelle ses deux bords opposés BO₁, BO₂ sont prolongés à angle droit par deux rebords respectifs R₁, R₂ munis chacun d'une protubérance cylindrique PC s'étendant du côté opposé au corps. Ces deux protubérances sont destinées à venir s'engager à force dans deux trous respectifs TR respectivement prévus sur les deux bordures latérales du film. Les rebords R₁, R₂ présentent par exemple la forme d'un trapèze isocèle dont la grande base est solidaire de la cuvette. Les bordures latérales d'un film support 3 présentent alors, dans l'intervalle des rebords R₁, R₂ des cuvettes successives, des découpes trapézoïdales dont les bords obliques s'étendent au droit des bords obliques des rebords R₁, R₂. Grâce à ces dispositions, les bordures latérales du film présentent chacune un profil dentelé dont les dents sont accentuées par la présence des rebords R₁, R₂ des cuvettes.

Le film est souple et est constitué d'une matière absorbante, en papier par exemple. Il est percé au dessus de chaque cuvette d'un orifice 4 pour permettre le passage d'une pipette.

Selon le dispositif représenté sur la figure 4, la bande de cuvettes 2 est guidée par un rail 5. Ce rail possède une section transversale en forme de U dont les deux ailes verticales sont prolongées à angle droit par deux rebords R₃, R₄, les rebords R₁, R₂ des cuvettes reposant sur les rebords R₃, R₄. La bande passe successivement par un poste de pipetage 6, un poste de détection 7 et un poste de découpe 8 à la sortie duquel chaque cuvette est récupérée dans un bac 9 prévu à cet effet.

Le fonctionnement de ces différents postes est géré par un processeur P comportant une unité centrale ainsi que des périphériques tels que, par exemple, un ensemble écran 10/clavier 11.

L'entraînement du film est assuré au moyen d'un mécanisme d'entraînement faisant intervenir une courroie sans fin 12 guidée à chaque extrémité par des galets 13, 14 dont l'un est entraîné en rotation par un moteur pas à pas M. Cette courroie comporte un crantage dont les crans sont espacés d'une distance égale à un multiple de la largeur des cuvettes (par exemple de 4-5 cuvettes). Ces crans présentent un profil à développante de cercle qui correspond à une crémaillère de forme de denture normale de manière à engrener parfaitement entre les dents du profil dentelé de la bande ; ils sont ainsi à même d'entraîner la bande de cuvettes avec précision, avec auto-centrage et compensation des jeux éventuels (les crans s'engageant plus ou moins profondément entre les susdites dents).

Le poste de pipetage 6 est desservi par une pipette verticale automatisée 15, mobile en hauteur, de manière à pouvoir prendre une position basse de pipetage ou de rinçage et une position haute permettant ses déplacements dans un plan horizontal.

Cette pipette 15 est fixée à l'une des extrémités d'un bras 16, monté rotatif par son autre extrémité autour d'un axe vertical 17. L'entraînement en rotation du bras 16 est assuré par un moteur commandé par le processeur P.

Grâce à ce mécanisme particulièrement simple, la pipette 15 peut être amenée successivement à l'aire de pipetage du poste de pipetage 6, à une aire de rinçage 18 diamétralement opposée, équipée d'une ou plusieurs cuves de rinçage et à deux aires de prélèvement 19, 20 disposées symétriquement par rapport à l'axe passant par l'aire de pipetage 6 et l'aire de rinçage 18.

Les aires de prélèvement 19, 20 sont situées dans le trajet de récipients R₁, R₂ portés par deux carrousels respectifs CR₁, CR₂ mobiles en rotation autour de deux axes verticaux 21, 22 et commandés par deux moteurs pilotés par le processeur P.

L'un de ces carrousels CR₁ est destiné à contenir les récipients R₁ d'échantillons sanguins à analyser, tandis que l'autre CR₂ contient des récipients R₂ affectés aux différents réactifs utilisables dans le cadre des analyses que l'on veut effectuer.

Bien entendu, le processeur P est programmé de manière à commander des séquences de pipetage appropriées à la nature des analyses à effectuer, et pouvant comprendre successivement :
- un rinçage préalable de la pipette 15,
- le prélèvement d'une dose d'échantillon contenu dans l'un des récipients R₁ du carrousel CR₁,
- l'injection de cette dose dans une cuvette C située dans le poste de pipetage 6,
- le rinçage de la pipette 15,
- le prélèvement d'une dose de réactif contenu dans l'un des récipients R₂ du carrousel CR₂,
- l'injection de cette dose de réactif dans la cuvette C,
- l'identification des échantillons sanguins à analyser ainsi que celle des réactifs s'effectuent automatiquement grâce à un lecteur de code à barres 23 apte à effectuer la lecture de codes à barres présents sur les récipients R₁, R₂ portés par les carrousels CR₁, CR₂.

Dans cet exemple, pour ces lectures, le lecteur de codes à barres unique 23 est monté à l'extrémité d'un bras 24 pivotant autour d'un axe vertical 25 de manière à pouvoir occuper trois positions, à savoir :
- une position P₁ de lecture des codes à barres des récipients R₁ du carrousel CR₁,
- une position P₂ de lecture des codes à barres des récipients R₂ du carrousel CR₂, et
- une position P₃ de lecture de récipients placés par l'opérateur dans un poste de lecture, par exemple en vue de la saisie des informations exploitées par le processeur dans le cadre du fonctionnement de l'appareil.

Le poste de mesure 7 comprend ici trois positions de mesures successives comprenant chacune (figure 4) un couple d'électroaimants coaxiaux E₁, E'₁ - E₂, E'₂ - E₃, E'₃ situés de part et d'autre du film 3, au droit des faces latérales des cuvettes C.

Le poste 7 comprend également :
- une source de lumière infrarouge 26 située au dessus de la cuvette,
- une caméra électronique 27 située au-dessous des cuvettes C portées par le film sur laquelle est projetée l'image de la bille éclairée par la source de lumière.

L'emploi de plusieurs positions de mesure sur le trajet du film présente l'avantage d'autoriser une plus grande souplesse de fonctionnement.

Les électroaimants E₁, E'₁ - E₂, E'₂ - E₃, E'₃ sont excités par un circuit de puissance PR piloté par le processeur P de manière à engendrer un champ magnétique impulsionnel susceptible d'entraîner la bille BE selon un déplacement alternatif au fond de la cuvette C.

La caméra 27 est couplée au processeur P qui analyse, en temps réel, l'image grâce à un logiciel approprié, de manière à mesurer l'amplitude des oscillations de la bille BE et déterminer l'instant critique où cette amplitude s'abaisse en dessous d'un seuil déterminé (par exemple 50 % de l'amplitude initiale).

Bien entendu, le processeur P effectue un comptage du temps entre le moment où le réactif a été injecté dans la cuvette C et cet instant critique, de manière à en déduire un temps de coagulation.

Les déplacements du film sont synchronisés avec les temps de fonctionnement de chacun des postes de l'appareil et notamment avec les impulsions de champ magnétique engendrées par les bobines.

Eventuellement, le poste de pipetage pourra être situé en un même emplacement que le poste de mesure.

Bien entendu, l'invention ne se limite pas au mode d'exécution précédemment décrit.

Ainsi, par exemple, chaque ensemble source infrarouge/caméra pourra présenter un champ incluant plusieurs cuvettes excitées chacune par un couple d'électroaimants distincts, de manière à suivre la cuvette sur une avance de plusieurs pas avec un processeur P programmé de manière à détecter simultanément les déplacements des billes de différentes cuvettes.

## Revendications

1. Dispositif d'entraînement d'une succession de cuvettes (C) solidarisées par un film (3) de manière à former une bande (2) dans un appareil d'analyse automatique (1), ce dispositif comprenant au moins une courroie crantée dont les crans agissent sur les cuvettes pour assurer l'entraînement de la bande, les susdites cuvettes présentant une ouverture au niveau de laquelle s'étendent deux rebords opposés (R₁, R₂) en saillie vers l'extérieur de la cuvette et présentant des conformations pour assurer en plus dudit entraînement, un centrage et une indexation des cuvettes,
les susdits rebords (R₁, R₂) présentant chacun deux bords obliques par rapport à l'axe longitudinal de la bande (2) de sorte que l'ensemble bande (2)/cuvettes présente une fonction de crémaillère.

2. Dispositif selon la revendication 1,
**caractérisé en ce que** le susdit film est fixé de façon détachable (PC, TR) aux susdits rebords.

3. Dispositif selon la revendication 1,
**caractérisé en ce que** lesdits rebords (R₁, R₂) présentent la forme d'un trapèze isocèle dont la grande base est solidaire de la cuvette (C).

4. Dispositif selon la revendication 1,
**caractérisé en ce que** les bordures latérales du film (3) présentent chacune un profil dentelé dont les dents sont accentuées par la présence des rebords (R₁, R₂) des cuvettes.

5. Dispositif selon la revendication 1,
**caractérisé en ce que** la susdite courroie est une courroie sans fin (12) guidée à chaque extrémité par des galets (13, 14).

6. Dispositif selon la revendication 5,
**caractérisé en ce qu'**au moins un des galets est entraîné en rotation par un moteur (M).

7. Dispositif selon la revendication 1,
**caractérisé en ce que** les crans de ladite courroie sont espacés d'une distance égale à un multiple de la largeur des cuvettes (C).

8. Dispositif selon la revendication 7,
**caractérisé en ce que** lesdits crans présentent un profil à développante de cercle qui correspond à une crémaillère de forme de denture normale.

9. Dispositif selon la revendication 1,
**caractérisé en ce que** lesdites cuvettes (C) sont fixées de façon détachable.

10. Dispositif selon la revendication 1,
**caractérisé en ce que** lesdites cuvettes sont guidées par un rail (5).

11. Dispositif selon la revendication 10,
**caractérisé en ce que** ledit rail (5) possède une section transversale en forme de U dont les deux ailes verticales sont prolongées à angle droit par deux rebords (R₃, R₄).

12. Dispositif selon l'une des revendications 10 et 11,
**caractérisé en ce que** les rebords (R₁, R₂) de la cuvette (C) reposent sur les rebords (R₃, R₄) du rail (5).

## Claims

1. Device for driving a series of bowls (C) joined together by a film (3) so as to form a strip (2) in an automatic analysis instrument (1), this device including at least one notched belt whose notches act on the bowls so as to ensure driving of the strip, the said bowls have an opening at the level of which two opposing shoulders (R₁, R₂) extend projecting towards the outside of the bowl, and having configurations to ensure at the same time said drive, a centering and an indexing of the bowls, the said shoulders (R₁, R₂) each having two oblique edges with respect to the longitudinal axis of the strip (2) so that the strip(2)/bowls unit has a rack function.

2. Device according to claim 1, **characterised in that** said film (PC, TR) is fixed to said shoulders and is able to be removed.

3. Device according to claim 1, **characterised in that** said shoulders (R₁, R₂) have the shape of an isosceles trapezium whose major base is integral with the bowl (C).

4. Device according to claim 1, **characterised in that** the lateral borders of the film (3) each have a serrated profile whose teeth are accentuated by the presence of the shoulders (R₁, R₂) of the bowls.

5. Device according to claim 1, **characterised in that** said belt is an endless belt (12) guided at each extremity by rollers (13, 14).

6. Device according to claim 5, **characterised in that** at least one of the rollers is driven in rotation by a motor (M).

7. Device according to claim 1, **characterised in that** the notches of said belt are spaced by a distance equal to a multiple of the width of the bowls (C).

8. Device according to claim 7, **characterised in that** said notches have an involute to a circle profile corresponding to a rack with a normal teeth shape.

9. Device according to claim 1, **characterised in that** said bowls (C) are fixed and are able to be removed.

10. Device according to claim 1, **characterised in that** said bowls are guided by a rail (5).

11. Device according to claim 10, **characterised in that** said rail (5) has a U-shaped cross section whose two vertical wings are extended at a right angle by two shoulders (R₃, R₄).

12. Device according to claim 10 and 11, **characterised in that** the shoulders (R₁, R₂) of the bowl (C) rest on the shoulders (R₃, R₄) of the rail (5).

## Patentansprüche

1. Mitnehmervorrichtung von aufeinander folgenden Küvetten (C) die über einen Film (3) miteinander verbunden sind, um in einem Analyseautomaten (1) ein Band (2) zu bilden, wobei diese Vorrichtung mindestens einen gekerbten Riemenantrieb umfasst, wobei die Rastkerben auf die Küvetten einwirken, um den Antrieb des Bandes zu sichern, wobei die besagten Küvetten eine Öffnung aufweisen, auf deren Ebene sich zwei gegenüberliegende überstehende Kanten (R₁, R₂) über die Küvette nach außen hin vorstehen und solche Eigenschaften aufweisen, um außer des genannten Antriebs eine Zentrierung und eine Indexierung der Küvetten zu sichern, wobei die besagten überstehenden Kanten (R₁, R₂) je zwei schräge Ränder zur Längsachse des Bandes (2) hin aufweist, so dass die Gesamtanlage Band (2)/Küvetten die Funktion einer Zahnführung aufweist.

2. Vorrichtung nach Anspruch 1, **gekennzeichnet dadurch, dass** der besagte Film lösbar (PC, TR) an besagte Kanten befestigt wird.

3. Vorrichtung nach Anspruch 1, **gekennzeichnet dadurch, dass** besagte Kanten (R₁, R₂) die Form eines gleichschenkligen Trapezes aufweisen, dessen große Basis einstückig mit der Küvette (C) verbunden ist.

4. Vorrichtung nach Anspruch 1, **gekennzeichnet dadurch, dass** die seitlichen Umrandungen des Filmes (3) je ein Zahnprofil aufweisen, dessen Zähne durch die vorhandenen überstehenden Kanten (R₁, R₂) der Küvetten akzentuiert werden.

5. Vorrichtung nach Anspruch 1, **gekennzeichnet dadurch, dass** besagter Riemen ein endloser Riemen (12) ist, der an jedem Ende durch Laufrollen (13, 14) geführt ist.

6. Vorrichtung nach Anspruch 5, **gekennzeichnet dadurch, dass** mindestens eine der Laufrollen unter Rotation durch einen Motor (M) mitgenommen wird.

7. Vorrichtung nach Anspruch 1, **gekennzeichnet dadurch, dass** die Rastkerben des besagten Riemens auf einer Entfernung beabstandet sind, die der mehrfachen Breite der Küvetten (C) entspricht.

8. Vorrichtung nach Anspruch 7, **gekennzeichnet dadurch, dass** besagte Rastkerben ein Profil eines entwickelten Kreises aufweisen, der einer normalen Form einer Zahnführung entspricht.

9. Vorrichtung nach Anspruch 1, **gekennzeichnet dadurch, dass** besagte Küvetten (C) lösbar befestigt sind.

10. Vorrichtung nach Anspruch 1, **gekennzeichnet dadurch, dass** besagte Küvetten von einer Schiene (5) geführt werden.

11. Vorrichtung nach Anspruch 10, **gekennzeichnet dadurch, dass** besagte Schiene (5) einen Querschnitt in Form eines U besitzt, deren zwei senkrechte Stege rechtwinklig durch zwei Kanten (R₃, R₄) verlängert sind.

12. Vorrichtung nach einem der Ansprüche 10 und 11, **gekennzeichnet dadurch, dass** die überstehenden Kanten (R₁, R₂) der Küvette (C) auf den Kanten (R₃, R₄) der Schiene (5) aufliegen.
